(19) Europäisches Patentamt / European Patent Office / Office européen des brevets

(11) **EP 2 625 503 B1**

(12) **EUROPEAN PATENT SPECIFICATION**

(45) Date of publication and mention
of the grant of the patent:
**01.04.2020 Bulletin 2020/14**

(51) Int Cl.:
***G01N 11/04*** *(2006.01)*      ***G01N 11/06*** *(2006.01)*
***G01N 21/33*** *(2006.01)*

(21) Application number: **11779476.8**

(86) International application number:
**PCT/GB2011/051903**

(22) Date of filing: **05.10.2011**

(87) International publication number:
**WO 2012/046054 (12.04.2012 Gazette 2012/15)**

(54) **VISCOSITY MEASUREMENT APPARATUS AND METHOD**

VORRICHTUNG UND VERFAHREN ZUR VISKOSITÄTSMESSUNG

APPAREIL ET PROCÉDÉ DE MESURE DE VISCOSITÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.10.2010 GB 201016992**

(43) Date of publication of application:
**14.08.2013 Bulletin 2013/33**

(73) Proprietor: **Paraytec Limited
Osbaldwick, York Yorkshire YO19 5UP (GB)**

(72) Inventor: **GOODALL, David
York Yorkshire YO19 5UP (GB)**

(74) Representative: **Vinsome, Rex Martin
Urquhart-Dykes & Lord LLP
12th Floor
Cale Cross House
156 Pilgrim Street
Newcastle-upon-Tyne NE1 6SU (GB)**

(56) References cited:
**US-A- 4 899 575          US-A- 5 333 497
US-A1- 2003 041 652     US-A1- 2006 070 426**

• **KIM SANGHO ET AL: "A scanning
dual-capillary-tube viscometer", REVIEW OF
SCIENTIFIC INSTRUMENTS, AIP, MELVILLE, NY,
US, vol. 71, no. 8, 1 August 2000 (2000-08-01) ,
pages 3188-3192, XP012038464, ISSN: 0034-6748,
DOI: 10.1063/1.1305513**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an apparatus and method for measuring the relative viscosity and specific viscosity of a sample solution. Embodiments of the present invention provide an apparatus for simultaneous measurement of solution viscosity, solute concentration, diffusion coefficient and size.

Ultra Violet (UV) absorbance is a key technology used in separation science for analysing species (molecules, ions, etc) in samples. One particular assembly which employs such a technique is disclosed in US Patent No. US-7262847 and European Patent No EP-1530716-B1 assigned to the present applicant. US-7262847 discloses an optical assembly comprising a light source, a number of sample vessels in the form of capillaries and a detector. The capillaries are positioned in a light path created between the source and the detector in a manner to enable transmission of light through the capillaries. The light source provides a beam of collimated light, and the detector has a plurality of detector locations. The detector is an area imager, for instance an active pixel sensor (APS). The capillaries each comprise a wall and core of relative shape and dimensions adapted to contain a sample for detection, which is in a fluid stream flowing through the capillaries. The capillaries define spatially separated transmitted light paths including a first, wall path which enters and exits the walls only of each capillary and which is spatially separated from a second, core path which enters and exits the walls and additionally the core of the capillary. The spatially separated wall and core paths are coupled to individual detector locations on the detector. Furthermore, additional individual detector locations on the detector are arranged to receive a further spatially separated light path from the light source, which does not pass through the capillary. It is known to use the assembly of US-7262847 to measure the diffusion coefficient and hydrodynamic radius of a sample using Taylor Dispersion Analysis (TDA).

It is known that there is a need to fully characterise solutions and formulations containing biopharmaceuticals, proteins and nanoparticles in order to gain a greater understanding of how they may behave in the body. In particular, it is known to be desirable to be able to measure the viscosity of a solution, and also the rheology of the solution and the hydrodynamic radius of the sample species in solution. Furthermore, it is known to be desirable to be able to monitor these parameters while working with very small sample volumes without requiring further dilution. It is undesirable to have to dilute the sample solution as this can affect the properties of the sample as formulated. Furthermore, many biopharmaceutical formulations have the active constituent at a high concentration (10 - 400 mg/ml, i.e. 1 - 40% w/w) and are not amenable to many standard techniques (e.g. conventional UV absorbance in standard path length cells, and size exclusion chromatography) without dilution.

The following known techniques may be applied to characterise solutions and formulations including materials of interest:

*Dynamic light scattering* can be used to calculate the diffusion coefficient, but it is necessary to have separate knowledge of the sample viscosity to convert the diffusion coefficient to hydrodynamic radius using the Stokes Einstein equation.

*Size exclusion chromatography* is commonly used to determine the proportions of monomer, oligomers and aggregates, but this requires dilution (often in a buffer medium which differs from that of the formulation) and chromatographic separation.

*Capillary viscometry* is a well-established technique for measuring the viscosity of a fluid, and includes variants where solvent and sample viscosity and their difference are measured simultaneously through use of a Relative Viscometer (an example of which is commercially available from Viscotek Corporation). However, none of these viscometric techniques have allowed simultaneous measurement of diffusion coefficient and hydrodynamic radius using TDA.

Classic capillary viscometers are based on the Ubbelohde and Ostwald designs. The time taken for the meniscus of the liquid to travel between two marks under gravity driven flow is measured. Typically the time is referenced to that of a standard liquid, to allow relative viscosity to be measured as the ratio of the time taken for the sample to the time for the standard. It is known to use an imaging camera to improve precision in timings in an Ubbelohde viscometer, for instance as described by Will et al.: www.cenam.mx/simposio2008/sm_2008/.../SM2008-S3C1-1104.pdf. All such capillary methods used large volumes of liquids, which is both cumbersome and problematic where only small sample volumes are available and it is preferred not to dilute the sample.

The viscosities of polymer-containing solutions have been measured in a capillary electrophoresis instrument (Bergman et al., J. Microcolumn Separations 1998, 10, 19-26). Mesityl oxide was dissolved as a UV marker in the polymer solution, and was driven using a constant pressure of 0.35 bar into a capillary of 50 $\mu$m internal diameter filled with the same polymer solution. The time taken for the mesityl oxide front to reach a window near the end of the capillary was measured and referenced to that of mesityl oxide in water driven into the same capillary filled with water. The relative viscosity was obtained as the ratio of the two times. An advantage of the method of Bergman et al. relative to classic capillary viscometry is that small volumes of liquid can be used.

*Capillary rheometers* measure viscosity as a function of shear rate, however they are not designed to measure size.

None of the above techniques used on their own provides information on viscosity as well as diffusion coefficient and size.

US-7039527-B2 (Caliper Life Sciences, Inc.) discloses a method of determining the molecular diffusivity of a solute in a micro-channel where a solute is introduced into a first end of a micro-channel and a first concentration profile is measured at first and second locations along the micro-channel. Further, this technique allows for the velocity to be measured simultaneously with the molecular diffusivity. However, there is no suggestion of how this methodology may be applied to the problem of measuring viscosity, nor even any identification that it would be desirable to do so.

US-7039527-B2 mentions profiles that are non Gaussian, specifically tailing. It is an object of certain embodiment of the present application to extend this by exploiting detailed fitting of profiles to theory to identify features characteristic of concentration- or shear-dependent flow, in particular features affecting the profiles at the boundaries between the sample and carrier media when these have different composition (e.g. differing levels of salt, sugars or other additives). No other known methodology allows extraction of concentration-dependent viscosity in a single measurement.

US 4,899,575 discloses a method and apparatus for determining viscosity. In particular, it discloses a method of measuring the viscosity of a sample solution, the method comprising: a capillary comprising first and second spaced apart detection windows; injecting a plug of a sample solution into the first end of the capillary, such that the plug or the flow front passes through the first and second detection windows; illuminating at least part of each detection window with a light source; detecting light from the light source passing through the carrier solution or the sample solution at each detector window using a detector; generating a detector output signal indicative of the profile of light absorbance of the sample solution plug or flow front passing through each detection window; determining the time of detection of the plug or flow front of the sample solution at each detector window; determining the time difference $\Delta t$ between the time of detection of the sample solution plug or flow front at each detection window; and calculating the specific viscosity $\eta_{sp}$ of the sample solution from the time difference $\Delta t$ for a flow front of the sample solution and a known time difference $\Delta t_o$ between the time of detection at each detection window for a plug of a reference sample solution. US 2003/0041652 A1 discloses a microfluidic viscometer. US 5,333,497 discloses a method and apparatus for continuous measurement of liquid flow velocity. A viscometer is also disclosed in Kim, Sangho et al: "A scanning dual-capillary-tube viscometer", Review of Scientific Instruments, AIP, vol. 71, no. 8, August 2000, pp3188-3192. US 2006/0070426 A1 discloses a method and apparatus for acquiring physical properties of fluid samples at high temperatures and pressures.

It is known in the art to apply the principles of Taylor Dispersion Analysis (TDA) to situations where the sample solution is injected into a carrier solution as either a pulse or a front. It is an object of certain embodiments of the present invention to apply this to measure diffusion coefficient and hydrodynamic radius. Furthermore, hitherto there has been no recognition in the art that these techniques may be applied to measure viscosity.

PCT/EP2009/053013 (WO/2010/009907) is an application by Centre National de la Recherche Scientifique, priority date 21 July 2008, entitled "Determination of the hydrodynamic radii and/or constituents of a mixture by analysis of the Taylor dispersion of a mixture in a capillary tube". The abstract is as follows. A method for analysing a mixture M comprising (i) a first monodisperse species, and (ii) a second species having a response coefficient which is distinct from the response coefficient of the first species (i) on at least one detection device, said method comprising the following steps: (A) the mixture M is injected at the inlet of a capillary tube and forced to be transported in said tube by the flow of a carrier liquid induced by a positive hydrodynamic and/or hydrostatic pressure between the inlet and the outlet of the capillary, whereby a phenomenon of Taylor dispersion of the species of the mixture M occurs in the tube; (B) by using a detection device able to detect simultaneously both species (i) and (ii) and placed in the region of the outlet of the capillary tube, a signal reflecting the Taylor dispersion obtained in step (A) is measured; (C) the signal obtained in step (B) is analysed, so as to determine specific contributions of species (i) and (ii) and thereby establishing at least one of the followings: - the content of species (i) and/or (ii) in the mixture M; and/or, - the mean hydrodynamic radius of the species (ii) or the hydrodynamic radius of species (i). Furthermore, there are previous descriptions in the literature for methods of determining contents of individual species in mixtures using TDA.

Certain embodiments of the present invention, described in greater detail below, differ from the techniques described in PCT/EP2009/053013 insofar as typically a single species is to be probed. Advantageously, because a single species is probed, the response coefficient (variation of absorbance with concentration at a given cell path length) is normally independent of the environment. Furthermore, PCT/EP2009/053013 gives no suggestion of probing the profile of the species and the viscosity as a function of the environment. For example, such a situation can occur when moving across a boundary between sample and carrier media of different composition, or where the rheological behaviour of the sample is strongly dependent on its concentration, and this concentration varies across the time-dependent profile within the capillary. Furthermore, the methodology to be described herein allows probing of binding equilibria involving the sample and a component in the carrier medium. This is the case where the carrier medium is strongly UV absorbing or scattering, due to the unique ability of the apparatus and methodology disclosed in US Patent No. US-7262847 and European Patent No EP-1530716-B1 assigned to the present applicant. Certain embodiments of the present invention exploit a plurality of detector locations and finite exposures of UV absorbance. Superimposing the exposures using appropriate time displacements is used to discriminate signal from noise, since the sample moves with constant velocity across the imager whereas noise occurs at random and is uncorrelated in time and space.

It is an aim of embodiments of the present invention to obviate or mitigate one or more of the problems associated with the prior art, whether identified herein or elsewhere. In particular it is an aim of embodiments of the present invention to provide an alternative method of measuring the viscosity of a solution. In certain embodiments it is an object of the invention to measure viscosity at the same time as measuring the diffusion coefficient and size of a species in solution. Particular embodiments of the invention allow characterisation of the relationship between the concentration of a species in solution and the viscosity, and the impact on the peak profile and the viscosity under such conditions. This characterisation can include cases where the species is dissolved in an injection solution with different composition to that of the carrier solution.

According to a first aspect of the present invention there is provided a method of measuring the viscosity of a sample solution, the method comprising: filling a capillary with a carrier solution, the capillary comprising first and second spaced apart detection windows; injecting a plug of a sample solution into the first end of the capillary and pumping the plug of the sample solution through the capillary at a first pump pressure such that the plug of the sample solution is preceded and followed by the carrier solution, or continuously pumping a sample solution through the capillary at a first pump pressure such that the flow front of the sample solution is preceded by the carrier solution, such that the plug or the flow front passes through the first and second detection windows; illuminating at least part of each detection window with a light source; detecting light from the light source passing through the carrier solution or the sample solution at each detector window using an array detector, the array detector comprising a two-dimensional array of detector locations; generating an array detector output signal indicative of the profile of light absorbance of the sample solution plug or flow front passing through each detection window; determining the time of detection of the plug or flow front of the sample solution at each detector window; determining the time difference $\Delta t$ between the time of detection of the sample solution plug or flow front at each detection window; and calculating the specific viscosity $\eta_{sp}$ of the sample solution from the time difference $\Delta t$ for a plug of the sample solution, the length of the capillary between the first and second ends $L$, the length of the plug $l_{inj}$ injected into the first end of the capillary, and a known time difference $\Delta t_o$ between the time of detection at each detection window for a plug of a reference sample solution whose viscosity is approximately equal to the viscosity of the carrier solution when pumped at the first pump pressure where $\eta_{sp} = [(\Delta t-\Delta t_o)/\Delta t_o] \times (L/l_{inj})$; or calculating the specific viscosity $\eta_{sp}$ of the sample solution from the time difference $\Delta t$ for a flow front of the sample solution, the length of the capillary between the first end and the first detector window $l_1$, the length of the capillary between the first end and the second detector window $l_2$, the length of the capillary between the first and second ends $L$, and a known time difference $\Delta t_o$ between the time of detection at each detection window for a flow front of a reference sample solution whose viscosity is approximately equal to the viscosity of the carrier solution when pumped at the first pump pressure where $\eta_{sp} = [(\Delta t-\Delta t_o)/\Delta t_o] \times [2L/(l_1+l_2)]$.

An advantage of the present invention is that an improved method of measuring viscosity is provided that is simpler and more accurate than known techniques, and has the added benefit of requiring only a very small volume of sample. In certain embodiments the concentration of species in solution can be accurately characterised, which has particular benefits for certain biopharmaceutical formulations which contain mixtures of excipients and active pharmaceutical ingredients at high concentration, and where viscosity is strongly dependent on the concentrations of all species. Advantageously the present invention allows the specific viscosity of a sample solution to be accurately measured even for highly viscous samples. It is desirable to be able to measure highly viscous fluids under pressure driven flow as for medicinal compounds a concentrated protein formulation may be needed for dosing in a single syringe. However, the way in which the formulation flows depends on its viscosity. Additionally fluid flow at high shear rate through a needle can break down proteins, which can be avoided if the dependence of viscosity on flow rate is well characterised, as is possible using the methodology of the present invention.

Advantageously, certain embodiments of the present invention provide an apparatus for simultaneous measurement of solution viscosity, solute concentration, diffusion coefficient and size through the use of a high-resolution area imaging detector. Suitable detectors may be generically referred to as area imagers and include an active pixel sensor (APS) which may be also be referred to as a CMOS sensor. The high-resolution area imaging detector has a high spatial and temporal resolution for real-time characterisation of sample profile, flow front and flow velocity as these parameters change during pressure-driven flow through a capillary with multiple windows.

The method may further comprise: dissolving an analyte in a buffer solution to form the sample solution.

According to a second aspect of the present invention there is provided a method of characterising the dependence of the viscosity of a sample solution on concentration of the sample solution, the method comprising: measuring a specific viscosity of a sample solution according to the method of claim 2 with the analyte dissolved in the buffer solution at a first concentration; and measuring a specific viscosity of a sample solution according to the method of claim 2 with the analyte dissolved in the buffer solution at one or more further concentrations different to the first concentration.

According to a third aspect of the present invention there is provide an apparatus for measuring a viscosity of a sample solution, the apparatus comprising: a capillary having a first end and a second end and first and second spaced apart detection windows; an injector arranged to selectively supply solutions to the first end of the capillary at a first pump pressure; a light source arranged to illuminate at least part of each detection window; an array detector comprising a two-dimensional array of detector locations arranged to detect light passing through the solutions in the capillary from the light source and arranged to generate an array detector output signal indicative of the profile of light absorbance of light passing through the solutions in the capillary; and a processor arranged to receive the output signal from the array detector; wherein the injector is arranged to fill the capillary with a carrier solution and to inject a plug of a sample solution into the first end of the capillary such that the plug of the sample solution is preceded and followed by the carrier solution, or the injector is arranged to fill the capillary with a carrier solution and then to continuously pump a sample solution through the capillary such that the flow front of the sample solution is preceded by the carrier solution, such that the plug or the flow front passes through the first and second detection windows; wherein the processor is arranged to determine the time of detection of the plug or flow front of the sample solution at each detector window from the array detector output signal and to determine the time difference $\Delta t$ between the time of detection of the sample solution plug or flow front at each detection window; and wherein the processor is arranged to calculate the specific viscosity $\eta_{sp}$ of the sample solution from the time difference $\Delta t$ for a plug of the sample solution, the length of the capillary between the first and second ends $L$, the length of the plug $l_{inj}$ injected into the first end of the capillary, and a known time difference $\Delta t_o$ between the time of detection at each detection window for a plug of a reference sample solution whose viscosity is approximately equal to the viscosity of the carrier solution when pumped at the first pump pressure where $\eta_{sp} = [(\Delta t - \Delta t_o)/\Delta t_o] \times (L/l_{inj})$; or the processor is arranged to calculate the specific viscosity $\eta_{sp}$ of the sample solution from the time difference $\Delta t$ for a flow front of the sample solution, the length of the capillary between the first end and the first detector window $l_1$, the length of the capillary between the first end and the second detector window $l_2$, the length of the capillary between the first and second ends $L$, and a known time difference $\Delta t_o$ between the time of detection at each detection window for a flow front of a reference sample solution whose viscosity is approximately equal to the viscosity of the carrier solution when pumped at the first pump pressure where $\eta_{sp} = [(\Delta t - \Delta t_o)/\Delta t_o] \times [2L/(l_1 + l_2)]$.

The two dimensional array of detector locations may be arranged to provide a signal indicative of the two dimensional distribution of light absorbance of the carrier and sample solutions across each detection window.

The light source may emit at least one wavelength of light that is absorbed by one or more absorbing species comprised in the sample solution.

The light source may be arranged to supply ultraviolet (UV) light and the array detector is arranged to provide a signal indicative of UV absorbance.

The light source may be arranged to provide light having a wavelength in the range 160 to 1200 nm, preferably 180 or 190 to 1200 nm.

The array detector may comprise a solid state sensing device, preferably a CMOS APS, a CCD or a CID.

Figure 1 schematically illustrates an experiment for the measurement of diffusion coefficient, size and relative viscosity in accordance with a first embodiment of the invention;

Figure 2 is a plot of UV absorbance profiles obtained during pressure-driven flow past two windows for a plug of a sample comprising a protein in a carrier solution at a range of concentrations;

Figure 3 schematically illustrates an experiment for the measurement of diffusion coefficient, size and relative viscosity in accordance with a second embodiment of the invention;

Figure 4 is a plot of the UV absorbance obtained during pressure-driven flow past two windows for samples injected continuously into a capillary containing a carrier solution, the samples comprising a reference sample and two drug formulations where the injection solution of the drug has a composition different from that of the carrier solution, illustrating an unusual viscosity / concentration dependence; and

Figure 5 is a plot of UV absorbance against time imaged at two detection windows following injection of plugs of samples comprising caffeine in PBS (i), caffeine in 0.1% xanthan solution in PBS (ii) and caffeine in 0.1% succinoglycan solution in PBS (iii).

Figure 6 shows a frontal run using a solution of 200 ppm caffeine in water (0% sucrose) as the reference sample dissolved in S, with water as the carrier solution S. Both fronts and backs are given, with fitting to the front profiles using a cumulative Gaussian function.

In accordance with embodiments of the present invention a measurement apparatus and method is provided, which operates by driving at a constant pump pressure a solution of a sample, solution A, through a capillary initially filled with a carrier solution S. Solution A may be injected as a pulse, and followed by continuous flow of solution S, or may be driven as a front. The flowing stream (SAS for a pulse, SA for a front) is imaged at two separate windows along the length of the capillary, for instance using an assembly of the form described in US-7262847 including an area imager. Analysis of a sequence of frames as the sample pulse or sample front passes through each window allows the time to exit the window, absorbance profile and variance of the pulse or front to be determined for each window. For sharp pulses, flow velocities may also be determined. With knowledge of the length of the capillary and the position of the windows the specific viscosity of the sample solution can be measured in accordance with the present invention. In certain embodiments of the present invention the following parameters may also be determined concurrently as will be described in greater detail below: solute concentration, diffusion coefficient and size. The wavelength of the light source may also be varied where it is determined that the light absorbance of the sample is inappropriate at a particular wavelength. For example, dilute solutions of proteins are ideally monitored at 214 nm. However, concentrated solutions of proteins in frontal runs are best monitored at 280 nm, since absorbance at 214 nm under these conditions is too high and the detector will be operating above the limits of its linear dynamic range. Additionally, by varying the concentration between experimental runs the variation of viscosity with concentration can be further characterised.

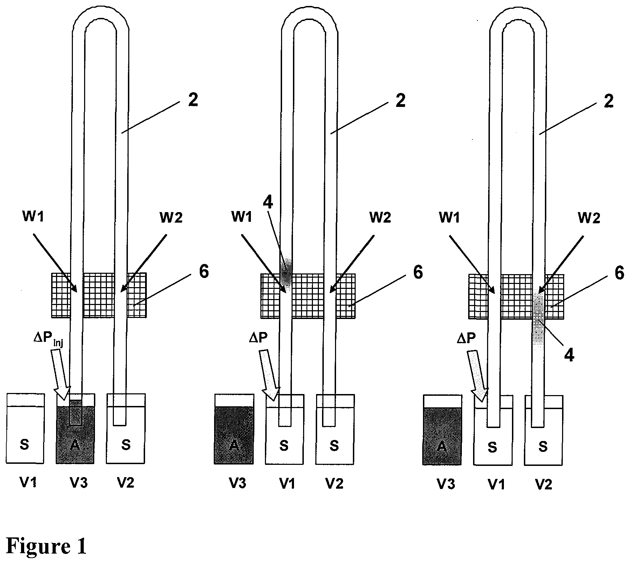

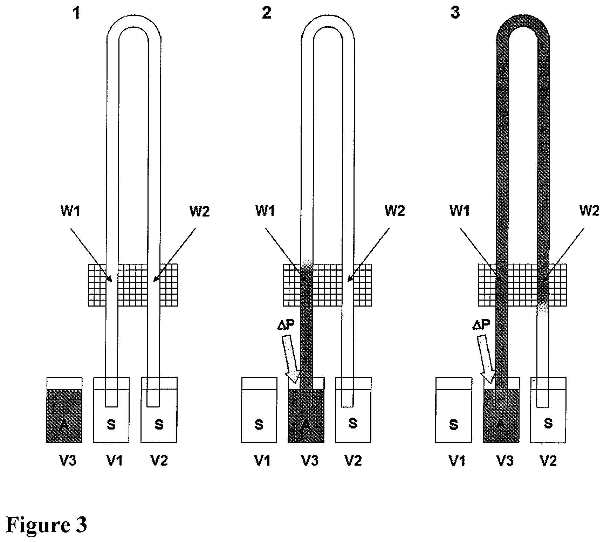

A viscosity measurement apparatus in accordance with the present invention is illustrated in Figures 1 and 3 and comprises a capillary 2 linking two vials V1 and V2. Liquid is driven at constant pressure from V1 to V2. Vial 1 contains a carrier solution S so that the capillary 2 is initially filled with the carrier solution. Vial 1 is then exchanged for a third vial V3 containing the sample solution, A. The sample is typically a pharmaceutical or biopharmaceutical species dissolved either in the carrier solution S, or in a different medium S1. S1 may differ from S in having an excipient, e.g. a salt or a sugar, dissolved at a different concentration than in S. This is typical in formulations which are designed to stabilise active drug species. The windows W1, W2 are spaced apart along the length of the capillary 2 between the vials, and the capillary 2 may be formed in a loop so that both windows W1, W2 may be imaged using a single optical assembly, by arranging for them to be adjacent to one another in the area imaged by the pixel array of an area imaging detector 6. To inject a plug of the sample A into the capillary 2 the third vial V3 is switched back to the first vial V1 after a suitable volume of the sample A has been injected under pressure. The detector captures a frame sequence comprising measures of the received light intensity at the area imager 6 as the pulse of sample solution SAS or the flow front SA passes through each window, which are typically transformed in software to provide data on absorbance versus time.

The procedure for determining diffusion coefficient and size from such data has been described in the prior art, for instance from application notes TN001, AN001, AN005 and AN015 ("Hydrodynamic radius using Taylor dispersion"; "Measurement of hydrodynamic radius for a standard protein over a wide concentration range"; "Rapid sizing of quantum dots and nanoparticles"; and "Precision and accuracy of protein size determination using the ActiPix TDA200 Nano-Sizing System") obtainable from www.paraytec.com. The procedure for determining diffusion coefficient and size from such data has also been described in the prior art, for instance in US-7039527.

From the times for the centres of the peak (where experiments are based upon injected plugs of sample solutions), or the midpoint of each front (for frontal analysis) to reach the end of each of the windows, $t_1$ and $t_2$, the time difference $\Delta t = t_2 - t_1$ can be determined. It is noted in US-7039527 that this allows determination of velocity. In accordance with certain embodiments of the present invention this work is extended and the determination of the time difference and/or velocities is a key parameter for measurement of viscosity, due to the high precision and reproducibility by which it is measured when the capillary to be described below in connection with Figure 1 is thermostatted at a constant temperature and the driving pressure is well controlled. Advantageously, a detector assembly of the type described in US-7262847 may be used with appropriate software to perform time-displaced averaging on the UV absorbance profile captured at each window to shift each exposure to the time of exit of the last pixel on the detector. However there is no recognition in US-7262847 that the measure time difference may be used in connection with other parameters, to be described below, in order to measure viscosity. Additionally, the present invention allows these measurements to be performed even in the event of a fluid with a non uniform composition in the capillary (as is the case for the flow front measurements illustrated in Figure 3 for which the proportions of carrier solution S and sample solution A vary over time).

The viscosity of a carrier solution S1 can readily be measured relative to a standard solvent S0 by injecting plugs of a dilute solution reference sample (which does not significantly affect the viscosity), e.g. caffeine, into the two solutions and measuring time differences between the two windows. For example, with water as the standard solvent, S0, and the other carrier solution S1, the relative viscosity $\eta_{rel}$ is given by equation 1.

$$\eta_{rel} = \eta_{S1}/\eta_{S0} = \Delta t_{o,S1}/\Delta t_{o,S0} \qquad (1)$$

Relative and specific viscosity (viscosity increment) are related through equation 4 given below.

The subscript o in equation 1 indicates that the marker sample is dilute and does not perturb the viscosity. That is $\Delta t_o$ is the time difference between detection windows for a dilute solution, for instance of caffeine in water, against which the behaviour of other sample solutions can be assessed. Table 1 (provided later on) gives examples of data obtained using a protein at 1 mg/mL concentration as a marker, and sets of experiments with numbers of replicates (n) in the range 4- 9 which demonstrate how high precision in measurement of time differences is obtained.

Advantageously, through the use of two measurement windows, the known technique of Taylor Dispersion Analysis (TDA) is extended. Measurement of the time to travel between the detector windows allows the calculation of viscosity with greater precision and accuracy. A particular advantage over use of methods with one measurement window is that by using time differences, this removes the need to make any corrections to the measured viscosity from capillary entrance effects, pressure ramp-up times and times to reach steady state. Such effects change the times to both windows in an identical fashion and therefore are automatically removed by measuring the time difference for travel between the two windows

Advantageously, certain embodiments of the present invention allow the simultaneous measurement of solution viscosity, diffusion coefficient and hydrodynamic radius of solute, and concentration of solute. This is achieved by applying the techniques described above to determine solution viscosity from UV absorbance data and applying known techniques to determine the remaining parameters from the same UV absorbance data.

Advantageously, through the use of an area imaging detector, of the form described in US-7262847 it is possible to obtain a highly accurate and precise measure of the time difference when a plug or flow front of a sample solution passes through two detection windows along the length of a capillary using a single detector.

Advantageously, certain embodiments of the present invention provide the ability to perform measurements in highly concentrated solutions through use of narrow bore capillaries and discrimination of signal against background scatter. Advantageously the present invention allows rapid characterisation of formulated biopharmaceutical solutions, without any dilution, filtration or other modification. Embodiments of the present invention are likely to prove useful in formulation development (R&D) and stability testing (R&D, QC). Embodiments of the present invention provide the ability to measure protein-small molecule and protein-protein interactions in media characteristic of body fluids, e.g. serum, plasma. Bodily fluids are carrier solutions with a high concentration of proteins and viscosities different from that of standard carrier solutions such as phosphate buffered saline (PBS).

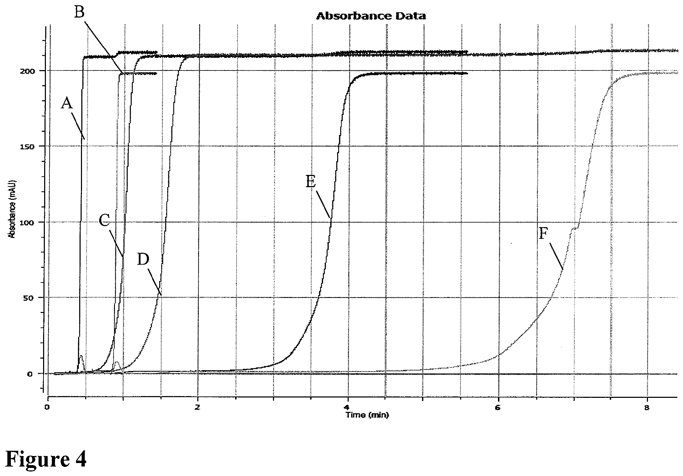

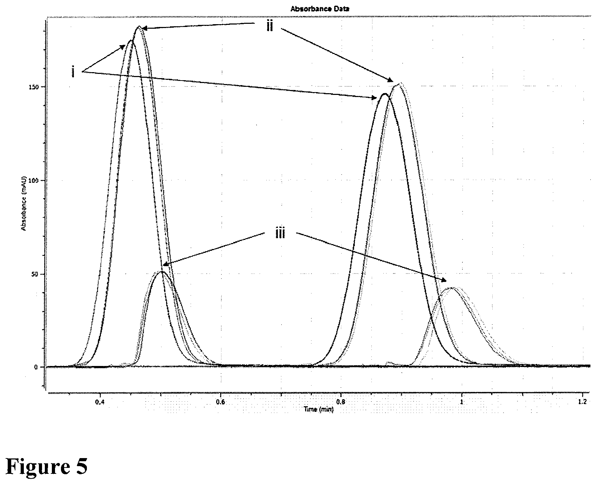

Certain embodiments of the present invention allow measurement of concentration dependence of viscosity, diffusion coefficient and hydrodynamic radius in a single run by detailed analysis of peak profiles. Specifically, if a good fit to a single Gaussian curve is achieved as a peak injected as a pulse passes through a detector window, this indicates that there is no significant variation of viscosity with concentration. However, a peak profile with fronting behaviour may be indicative of a sample with significantly higher viscosity than that of the carrier medium. This is illustrated in Figure 5, to be described in greater detail below. Using the frontal method, the fitting function used is a cumulative Gaussian. If the apparent radius obtained from fitting the front is higher than that from fitting the back, this is indicative of viscosity increasing with sample concentration. If there are significant deviations from cumulative Gaussian fitting functions, this could be indicative of unusual relationship between viscosity and concentration, for which Figure 4 is an example.

Referring to Figure 1, this illustrates a schematic of an experimental apparatus for measuring the specific viscosity of a sample solution in accordance with an embodiment of the present invention. Advantageously the same apparatus may also be used for measuring diffusion coefficient and size (that is, hydrodynamic radius - for the purpose of this specification the terms are synonymous). The left hand view shows the initial arrangement with a capillary 2 extending between input and output vials. Initially the input vial is V1 containing the carrier solution. The capillary is filled with the carrier solution and then a third vial V3 containing the sample solution V3 is substituted for vial V1. The left hand view shows the sample solution A being injected into the capillary 2 under a pump pressure $\Delta P_{inj}$. The sample solution A may comprise an analyte dissolved in the carrier solution S. The centre view shows the same apparatus with an injected pulse of sample solution A driven at constant pressure $\Delta P$ between V1 and V2 and imaged with the pulse 4 broadened by Taylor dispersion and having its centre at the end of a first window W1. The right hand view shows the sample solution 4 further broadened by additional Taylor dispersion and imaged with its centre at the end of a second window W2. Imaging is performed using an area imaging detector 6 shown behind W1 and W2 image windows and formed from a single active pixel sensor of the form disclosed in US-7262847. Although not clearly visible in Figure 1, it will be appreciated that the maximum absorbance will be exhibited at the centre of each plug.

In order to calculate the diffusion coefficient, size and relative viscosity it is necessary to measure the times for the sample zone to exit the imager windows (the centre time measured at the output end of the window), $t_1$ and $t_2$, from which the time difference is:

$$t_2 - t_1 = \Delta t \qquad (2)$$

Profiles of absorbance ($A$) are measured at each window plotted against time $t$ at each window and the parameters of the profiles at each window (e.g. standard deviation, variance) can be calculated.

Table 1 gives examples of data obtained using as a reference sample a protein at 1 mg/mL concentration, and sets of experiments with numbers of replicates (n) in the range 4- 9. The relative viscosity is determined from the time difference of the sample compared with the time difference for the reference sample. In the example of Table 1 the viscosities of protein solutions over a range of concentrations and levels of excipient, sucrose, are determined relative to a standard taken as the protein solution at 1 mg/mL with no added sucrose. The results shown in Table 1 exemplify the use of equation 1 to measure relative viscosity.

Table 1: Timings for protein without or with added sucrose over a range of protein and sucrose concentrations; detection wavelength 214 nm. The number of replicates is given in the second column, and each time is given as the average with its standard deviation.

| Protein concentration (mg/mL) [sucrose concentration (mg/mL)] | n | Time Window 1 (s) | Time Window 2 (s) | Time difference (s) | Relative viscosity |
|---|---|---|---|---|---|
| 0.1 [0] | 8 | 389.99±0.52 | 743.22±0.79 | 353.23±0.61 | 0.999 |
| 1 [0] | 4 | 389.86±0.54 | 743.56±0.53 | 353.70±0.39 | 1.000 |
| 10 [0] | 5 | 393.16±1.45 | 751.48±2.98 | 358.32±1.56 | 1.013 |
| 1 [50] | 8 | 429.61±0.76 | 823.17±1.14 | 393.56±0.49 | 1.113 |
| 1 [100] | 8 | 472.90±1.71 | 905.17±3.18 | 432.27±1.51 | 1.222 |
| 1 [150] | 6 | 508.16±1.25 | 970.90±2.70 | 462.73±1.46 | 1.308 |

The time differences are seen to have smaller errors than those which would be calculated using error propagation theory. Specifically, in error propagation theory, uncorrelated errors are additive. For W = X-Y, the error in W is the square root of [(error in x)$^2$ + (error in y)$^2$] e.g. for 1 mg/mL data in the table, $(0.54^2 + 0.53^2)^{1/2}$ = 0.76, whereas the actual error observed is 0.39; this confirms that the times are correlated. RSDs in time differences range from 0.1 to 0.4%. This shows that relative viscosities can be measured with a precision of better than 0.5%. Relative viscosities are tabulated in the last column, with the result for 1 mg/mL protein without added sucrose considered as the reference.

Using the apparatus of Figure 1, a solution of a 90 mg/mL protein dissolved in phosphate buffered saline (PBS) was prepared to provide a carrier solution S characteristic of a biopharmaceutical formulation, and 100 mg/mL of the same protein dissolved in PBS was prepared as a sample solution A and injected into the 90 mg/mL protein in PBS carrier solution S. This exemplifies the ability of a UV area imaging detector with time-displaced integration as described in EP-1530716-B1 together with the experimental set up of Figure 1 to work with a very concentrated protein solution as carrier, and looking at differential effects since the net difference in concentration between sample and carrier is 10 mg/mL. It is known that diffusion is best measured with the carrier solution closely matched in composition to that of the sample.

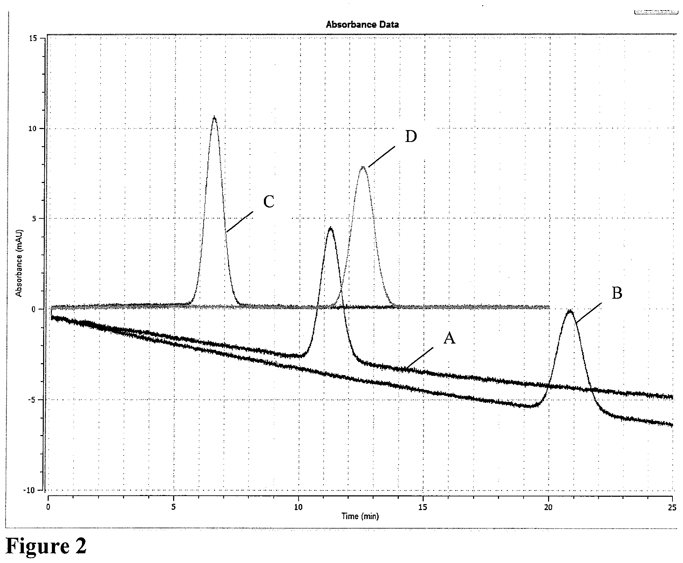

A screenshot showing a run for injection of 100 mg/mL protein (human serum albumin) in PBS into the carrier solution 90 mg/mL of the same protein in PBS is shown in Figure 2, together with that for 10 mg/mL protein in PBS injected into PBS as carrier solution (all imaged at 280 nm). Four traces are shown in Figure 2: A,B,C,D and correspond to the following: A and B are 100 mg/mL in PBS injected into carrier solution 90 mg/mL in PBS at windows 1 and 2, respectively; C and D are 10 mg/mL in PBS injected into carrier solution PBS at windows 1 and 2, respectively. The peak amplitudes are seen to be similar: this is consistent with the differential concentration of protein between sample and carrier solution being 10 mg/mL in each case. The times for 90 mg/mL protein in PBS as the carrier solution (A and B) are seen to be much longer than those for PBS as carrier solution (11 as compared to 6.5 min to window 1; 21 as compared to 12.5 min to window 2). The significance of this is that the area imager and methodology described herein allow viscosity to be measured in highly concentrated protein solutions.

Table 2 below shows data from this experiment in the final row of the table. Comparisons are made with results for 100 and 10 mg/mL protein samples in PBS injected into carrier solution PBS (rows 1 and 2), and 100 mg/mL protein in PBS injected into 90 mg/mL protein in PBS as the carrier solution (row 3). The value for the viscosity of water is used to calculate the hydrodynamic radius. Viscosities are taken relative to the 10 mg/mL protein in PBS as reference sample.

Table 2: Relative viscosity comparisons

| Protein concentration (mg/mL) | Diffusion coefficient ($10^{-11}$ m$^2$ s$^{-1}$) | Radius* (nm) | n | Time difference (s) | Relative viscosity |
|---|---|---|---|---|---|
| 100 | 7.229±0.037 | 3.392±0.018 | 8 | 361.13±1.34 | 1.008 |
| 10 | 7.073±0.120 | 3.468±0.059 | 9 | 358.35±0.62 | 1.000 |
| 100 into 90 | 7.348 | 3.337 | 1 | 575.10 | 1.605 |
| *value of viscosity of water assumed in calculating all radii | | | | | |

It is evident that there is a huge increase in the time difference, indicating that the relative viscosity is much higher in the carrier solution 90 mg/mL protein in buffer by comparison with the buffer alone. Taking the 10 mg/mL as reference sample, the relative viscosity is the ratio of the time differences, equation 1 shows that $\eta_{rel}$ = 575.10/358.35 = 1.605. This value is in good agreement with independent measurements for the relative viscosity of solutions of 90 mg/mL serum albumin in PBS.

Whilst the diffusion coefficients are the same, when the viscosity is corrected to that of the 90 mg/mL solution, the recalculated radius is 3.337/1.605 = 2.079 nm. This nominal value is indicative of protein-protein interactions. Other techniques, for example dynamic light scattering, show similar effects with serum albumin.

In the first embodiment of the present invention, measurements may be taken when injecting a plug of length $l_{inj}$ of a sample solution A having viscosity different from that of the carrier solution. This may be used to calculate the viscosity of the sample solution relative to the carrier solution S, $\eta_{rel}$, and hence the specific viscosity of the sample solution A using equation 4. Advantageously this means that it is not necessary to provide a matched buffer solution. This viscosity difference may arise because the sample itself is highly concentrated (e.g. 100 mg/mL protein), or alternatively because the sample is formulated in a solution with excipients such as a sugar or salt at high concentration, and this formulation solution differs from the carrier solution. Many biopharmaceutical proteins are formulated in proprietary buffers, and in such cases a standard buffer such as PBS may be used as the carrier solution. The sample plug is injected into a capillary filled with the carrier solution S. The specific viscosity of the sample, $\eta_{sp}$, may be determined using a two-windowed capillary from the time difference $\Delta t_o$ for an injected plug of a dilute solution of test material having a viscosity approximately equal to that of the carrier solution, for instance a marker of caffeine dissolved in the carrier solution, and time difference $\Delta t$ with the sample for which the relative and specific viscosities are to be determined. This requires knowledge of the fraction of the capillary $l_{inj}/L$ which is initially filled with the sample. By analogy, this can be considered to be like a series electrical resistor (see for example D. Kim, N. C. Chesler and D. J. Beebe, A method for dynamic system characterization using hydraulic series resistance, Lab Chip, 2006, 6, 639-644). If there is a high resistance section (equivalent to the injected plug), the overall resistance increases in proportion to the lengths and resistances of the various sections. The specific viscosity is given by equation 3 and the specific and relative viscosities are linked by equation 4.

$$\eta_{sp} = [(\Delta t - \Delta t_o)/\Delta t_o] \times (L/l_{inj}) \qquad (3)$$

$$\eta_{sp} = (\eta - \eta_{S0})/\eta_{S0} = \eta_{rel} - 1 \qquad (4)$$

The injection length $l_{inj}$ is typically calculated using Poiseuille's law, knowing the length of the capillary $L$, the capillary radius $r$, the pressure $\Delta P$ and the time over which the pressure is applied for injection, $t_{inj}$.

$$l_{inj} = r^2 \Delta P t_{inj}/8\eta_{S0}L \qquad (5)$$

The radius $r$ may readily be obtained as will be well known to the skilled person by means of determining the mass $\Delta m$ of solvent (e.g. water) of a known viscosity, $\eta_{S0}$, and density, $\rho$, transferred through the capillary when driven by a known pressure $\Delta P$ for a fixed time $t$. As for the calculation of radius, this method uses Poiseuille's law rearranged in the form

$$r = [8\eta_{S0}L\Delta m/\pi\rho\Delta Pt]^{1/4} \qquad (6)$$

This embodiment of the invention is exemplified by consideration of results obtained in experiments using plugs of caffeine dissolved in solutions of the carbohydrate biopolymers xanthan and succinoglycan. Both are known to enhance the viscosity of aqueous solutions at low concentration. These solutions are shear thinning, i.e. having viscosity which decreases with increasing shear rate. Figure 5 shows results of injections of plugs of dilute solutions of caffeine dissolved in (i) PBS, (ii) 0.1 % w/v xanthan in PBS and (iii) 0.1% w/v succinoglycan in PBS, all run with PBS as the carrier solution. Figure 5 gives an overlay of all data for runs at a constant pressure of 1000 mbar, with three repeat traces given for each of the three sample at the two windows, and demonstrates the reproducibility of the technique. The wavelength for (i) and (ii) was 214 nm, that for (iii) 254 nm. Since caffeine has a lower absorption coefficient at 254 than at 214 nm, this accounts for the lower signal amplitudes in (iii) though all injection volumes were identical.

Several advantages of the invention as regards measurement of viscosity follow from consideration of these data. Firstly, results are obtained with very small values of sample. The injected volume is only 230 nanolitres. This is several orders of magnitude lower than with other techniques. It is evident that the caffeine dissolved in succinoglycan runs most slowly, and thus that this solution has the highest viscosity. Quantitative measurement of the various viscosity parameters follow from the results, as illustrated below.

A second advantage is the information from peak profiles. Whereas the profiles for the sample in PBS have Gaussian symmetry, the profiles for sample in succinoglycan show asymmetry, with distinct fronting. This behaviour is consistent with shear thinning. For flow of a shear thinning fluid in a capillary, the sample at the centre where the velocity gradient is zero experiences zero shear and thus has high viscosity, whereas the sample at the wall of the capillary has the highest shear and thus the lowest viscosity. In such situations the flow front is expected to depart from the parabolic shape characteristic of a Newtonian fluid and adopt a flatter plug-like profile. The results in Figure 5 demonstrate the benefits of use of peak profiles for qualitative investigation of non-Newtonian behaviour in shear-thinning solutions.

Table 3 exemplifies use of equations 3, 4 and 5 to give values of relative viscosity and specific viscosity for 0.1% succinoglycan at three different drive pressures, the absolute viscosity of the solutions under these conditions, and comparison with values from a standard rheometric method. The capillary had $L$ = 129.9 cm and $r$ = 38.6 $\mu$m. Sample solutions were injected at pressure 500 mbar for 6 s. Temperature = 25.0 °C. The viscosity of water at 25 °C, $\eta_{S0}$, is 0.8905 mPa s, and substitution of values for $L$, $r$, $\Delta P_{inj}$ and $t_{inj}$ into equation 5 gives the injection length as $l_{inj}$ = 4.83 cm. Thus the factor $L/l_{inj}$ = 129.9/4.83 = 26.89. Values for the specific viscosity given in the fourth column are derived from the timings and the length ratio factor, and values for the viscosities in the sixth column are obtained by multiplying the relative viscosity by the viscosity of water. The shear rate at the wall given in the seventh column is calculated using the formula $4(l_2-l_1)/(r\Delta t)$, and values are obtained using the capillary radius, the length between the windows $(l_2-l_1)$ = 40.5 cm = 0.405 m, and the time differences from the second column. The final column in Table 3 gives values from an independent rheometric study of viscosity for 0.1% succinoglycan as a function of shear rate. It is clear that there is good agreement between the shear-dependent viscosities measured using the first embodiment of this invention and an independent method.

Table 3. Use of timings for caffeine peak to determine relative viscosity, specific viscosity and viscosity for 0.1% succinoglycan. Each time difference is the mean value from three replicate runs. Viscosity values in last column are from independent rheological measurements.

| Pressure (mbar) | $\Delta t$ (s) | $\Delta t_o$ (s) | $[(\Delta t-\Delta t_o)/\Delta t_o]\times [L/(l_{inj})]= \eta_{sp}$ | $\eta_{rel}=1+\eta_{sp}$ | $\eta = \eta_{rel}\eta_w$ (mPa s) | Shear rate (s$^{-1}$) | $\eta$ (mPa s) |
|---|---|---|---|---|---|---|---|
| 300 | 98.14 | 72.37 | 9.58 | 10.58 | 9.42 | 428 | 10 |
| 1000 | 29.07 | 24.24 | 5.36 | 6.36 | 5.66 | 1444 | 5 |
| 1500 | 18.87 | 16.44 | 3.97 | 4.97 | 4.43 | 2236 | 4 |

While an embodiment of the present invention described above relates to calculating properties of a sample formulation through injecting a plug of the sample into a capillary filled with a carrier solution, there is now described a further embodiment of the invention in which the capillary is initially filled with the carrier solution and then a sample solution is continuously supplied to the capillary under constant pressure. Measurements are taken of the flow front of the sample.

For frontal analysis, where the times at the two windows can be obtained and from this the time difference, $\Delta t$, the specific viscosity is obtained by reference to runs with a reference sample, e.g. caffeine, as dilute solution in the solvent such that the reference sample does not significantly affect the viscosity of the carrier solution giving time difference $\Delta t_o$. Dilute caffeine adds no resistance to the carrier solution when injected as a plug or a front and therefore meets the requirements of a reference sample.

Referring to Figure 3, this illustrates an experimental apparatus for measurement of diffusion coefficient, size and relative viscosity in frontal analysis mode. It will be appreciated that this is substantially the same as for the apparatus of Figure 1 and therefore the same numbering is used. The left hand view shows the initial arrangement with the capillary extending between input and output vials (V1 and V2) both containing carrier solution S. The centre view shows that input vial V1 has been replaced by vial V3 containing sample solution A, which is being driven by constant pressure $\Delta P$ through the capillary. In the centre view the centre of the flow front is positioned at the downstream end of the first window W1. The right hand view shows the sample flow front at a later time imaged with the centre of the flow front at the end of second window W2. The area imaging detector 6 shown behind W1 and W2 images both windows on a single active pixel sensor.

As the SA flow front passes through each window the imaging detector (hatched in schematic to illustrate the individual pixels) captures a sequence of frames of the SA front as it moves across the imaging area. By analysing the two sequences of frames, the times for the centres of the fronts, $t_1$ and $t_2$, at windows 1 and 2 respectively, and the standard deviations and variances of the fronts can be calculated. The time difference $\Delta t = t_2 - t_1$ is compared to the time difference $\Delta t_o$ measured when driving a front of a dilute solution of a reference sample dissolved in S into S, or when driving a plug of reference sample in S as described above. The specific viscosity then follows knowing these time differences and the lengths to the end of the first and second windows, $l_1$ and $l_2$, respectively, and the total length of the capillary, $L$.

$$\eta_{sp} = [(\Delta t - \Delta t_o)/\Delta t_o] \times [2L/(l_1 + l_2)] \tag{7}$$

This equation is derived using the principles of fluidics. Flow rate, hydraulic resistance and pressure drop are analogous to current, resistance and voltage in electrical circuits (see reference above). During drive through the capillary at constant pressure, the flow rate decreases with time since the hydraulic resistance of the sample is greater than that of the buffer. Noting that hydraulic resistance is directly proportional to viscosity, integration of distance travelled over time yields equation 7.

The inherent viscosity $\eta_i$ of a sample solution can be calculated if required from specific viscosities $\eta_{sp}$ calculated from either plug analysis or frontal analysis in combination with the mass concentration c using equation 8.

$$\eta_i = \ln(1 + \eta_{sp})]/c \tag{8}$$

It is well known that in the limit of extrapolation to zero concentration the inherent viscosity is equal to the intrinsic viscosity $[\eta]$ (see for example J. L. Richards, Viscosity and the shapes of macromolecules, J. Chem. Educ. 1993, 70, 685-689). The intrinsic viscosity, normally reported with units $cm^3\ g^{-1}$, is independent of concentration and is a parameter characteristic of the solute alone which is particularly important for proteins and polymers.

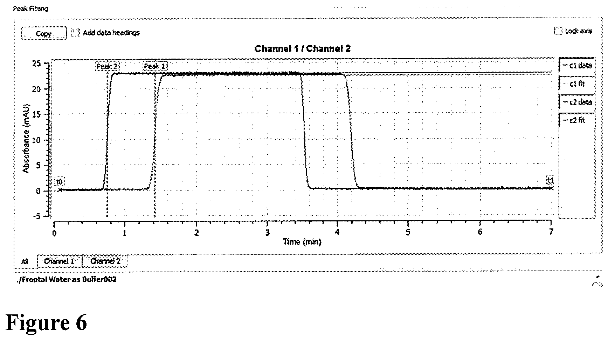

This second embodiment of the invention is exemplified by consideration of results obtained in experiments using caffeine dissolved in solutions of sucrose at a range of concentrations (% w/v). Figure 6 shows a frontal run using a solution of 200 ppm caffeine in water (0% sucrose) as the reference sample dissolved in S, with water as the carrier solution S. The detection wavelength was 214 nm, and the drive pressure was 630 mbar. The fittings to single cumulative Gaussian curves for the fronts at each window are shown, and from the centres of these the times are obtained to give the time difference, $\Delta t_o$ in this case. The traces from this frontal run can be understood by reference to Figure 3. After the SA front has passed the second window and filled the capillary, vial V3 is replaced by V1. Carrier solution is then driven through the capillary to enable the back of the profile to be seen (i.e. the transition AS). After the AS profile has passed the window the absorbance returns to the baseline characteristic of the carrier solution.

Relative and specific viscosities from frontal runs with 200 ppm caffeine dissolved in solutions containing sucrose at a range of concentrations with water as carrier solution are given in Table 4. Each value for $\Delta t$ given in Table 4 is the average of three measurements. Caffeine in water is the reference sample, and the first row in the table gives $\Delta t_o$. The percentage relative standard deviation shows the reproducibility, and illustrate that all values for relative viscosity can be obtained with a precision of better than 2%. The final column gives values derived from the literature (J. Chirife and M. Buera, J. Food Eng., 1997, 33, 221-226), and shows that there is good agreement within the error limits of the technique.

Table 4. Time differences between peaks at first and second windows for increasing sucrose concentrations and specific and relative viscosities for 5%, 10%, 15% and 20% sucrose solutions. The capillary has $L$ = 132.2 cm, $l_1$ = 44.9 cm, $l_2$ = 89.9, $2L/(l_1 + l_2)$ = 1.96. Temperature = 25.0 °C.

| Sucrose % w/v | $\Delta t$ (s) | %RSD | $[(\Delta t - \Delta t_o)/\Delta t_o] \times [2L/(l_1 + l_2)] = \eta_{sp}$ | $\eta_{rel} = 1 + \eta_{sp}$ | $\eta_{rel}$ (literature) |
|---|---|---|---|---|---|
| 0 | 39.977 | 0.69 | 0 | 1 | 1 |
| 5 | 42.280 | 0.64 | 0.1128 | 1.113 | 1.126 |
| 10 | 45.760 | 0.98 | 0.2835 | 1.284 | 1.312 |
| 15 | 51.480 | 1.22 | 0.5641 | 1.564 | 1.556 |
| 20 | 58.294 | 1.16 | 0.8981 | 1.898 | 1.881 |

Results from experiments using this second embodiment of the invention can also be used to provide measurements of sample concentration and hydrodynamic radius. Concentration is obtained from the amplitudes of the traces, i.e. the difference for absorbance between carrier solution and sample, which may be related to concentration knowing the absorption coefficient at the measurement wavelength. Hydrodynamic radius is obtained as described elsewhere. The procedure for determining diffusion coefficient and size from such data has been described in the prior art, for instance from application notes TN001, AN001, AN005 and AN015 ("Hydrodynamic radius using Taylor dispersion"; "Measurement of hydrodynamic radius for a standard protein over a wide concentration range"; "Rapid sizing of quantum dots and nanoparticles"; and "Precision and accuracy of protein size determination using the ActiPix TDA200 Nano-Sizing System") obtainable from www.paraytec.com. It should be noted that in order to correct for changes of velocity during the runs affecting the standard Taylor dispersion formulae, the radius obtained assuming the viscosity of the carrier solution should normally be corrected by dividing by the factor $\Delta t/\Delta t_o$ when considering analysis of fronts, and multiplying by this factor when considering backs.

Application of the second embodiment of the invention to a more complex system is considered next. Referring now to Figure 5 this shows the absorbance profiles for plugs of a range of samples passing through first and second detection windows. Traces A and B show a low concentration, small molecule front (sorbate) at window 1 and 2 respectively, which show up as sharp fronts at same position as caffeine plugs (seen as Gaussians under curves A and C, but not labelled). This provides the reference time difference $\Delta t_o$ as the sorbate flow front does not affect the fluid resistance. Also illustrated are two frontal runs with two alternative formulations of a drug at high concentration (60 mg/mL, i.e. 6% w/v) in a solution which contains a sugar at 4% w/v. The carrier solution is water. Formulation 1 gives trace C at window 1 and trace E at window 2. Formulation 2 gives trace D at window 1 and trace F at window 2. It is clear that these are considerably slower, and thus the relative and specific viscosities can be calculated with good precision. The diffusion coefficients and radii for the fronts are obtained by fitting to two overlapping cumulative Gaussian functions. The top part of the front involves diffusion in the sugar solution (where the formulation is stable), and the size comes out that of the molecule as expected. The bottom part of the front involves diffusion of the drug in water. Analysis of the data shows that the drug has a high hydrodynamic radius in the water part, consistent with forming a micellar aggregate. The sugar diffuses independently to give a relatively sharp front, so the leading edge of the drug front definitely has moved out and away from the sugar part.

Table 5 exemplifies use of equations 7 and 8 to give values of relative viscosity and specific viscosity for the two drug formulations, and inherent viscosity for the drug in both formulations.

| Sample | $\Delta t$ (s) | $[(\Delta t - \Delta t_o)/\Delta t_o] \times [2L/(l_1+l_2)]$ $= \eta_{sp}$ | $\eta_{rel} = 1 + \eta_{sp}$ | $\eta_i = \ln(1+\eta_{sp})]/c$ (cm$^3$ g$^{-1}$) |
|---|---|---|---|---|
| Formulation 1 | 163.05 | 9.45 | 10.45 | 39.1 |
| Formulation 2 | 326.72 | 20.9 | 21.9 | 51.5 |

Table 5. Use of timings to provide information on specific and relative viscosities and inherent viscosity for a drug in two formulations. Both formulations have $c$ = 0.060 g cm$^{-3}$. The reference sample is sorbate or caffeine in water, with $\Delta t_o$ = 28.5 s. The capillary has $L$ = 143.3 cm, $l_1$ = 46.9 cm, $l_2$ = 96.3, $2L/(l_1+l_2)$ = 2.00. Temperature = 25.0 °C.

Advantageously, embodiments of the present invention allow the specific viscosity of a sample to be measured even for very small sample volumes. The volume injected under pulse mode (first embodiment) is typically 100 - 250 nanolitres. In frontal mode (second embodiment), the volume is more typically around 5 microlitres. This is a real advantage over previous techniques, where typically 50 microlitres or more are required for a single measurement.

The present invention provides a method of measuring the relative and specific viscosities of sample solutions which correlate closely with measures of viscosity achieved using different techniques. As has been shown by reference to Figure 5 and Table 3, it is also possible to assess the effect of shear thinning by looking at the effect of shear thinning on the peak profiles.

Advantageously, embodiments of the present invention allow different parts of fronts or plug profiles to be analysed differently, since they may correspond to different composition of carrier media. This may be illustrated by reference to the above discussion of Figure 4; the fronts do not fit to single cumulative Gaussian functions, but may be successfully analysed as two overlapping cumulative Gaussians having components with different radii.

Further modifications to, and applications of, the present invention will be readily apparent to the appropriately skilled person without departing from the scope of the appended claims.

**Claims**

1.   A method of measuring the viscosity of a sample solution (A, 4), the method comprising:

filling a capillary (2) with a carrier solution (S), the capillary (2) comprising first and second spaced apart detection windows (W1, W2);

injecting a plug of a sample solution (4) into the first end of the capillary (2) and pumping the plug of the sample solution (4) through the capillary (2) at a first pump pressure ($\Delta P$) such that the plug of the sample solution (4) is preceded and followed by the carrier solution (S), or continuously pumping a sample solution (A) through the capillary (2) at a first pump pressure ($\Delta P$) such that the flow front of the sample solution (A) is preceded by the carrier solution (S), such that the plug (4) or the flow front passes through the first and second detection windows (W1, W2);

illuminating at least part of each detection window (W1, W2) with a light source;

detecting light from the light source passing through the carrier solution (S) or the sample solution (A, 4) at each detector window (W1, W2) using an array detector (6), the array detector comprising a two-dimensional array of detector locations;

generating an array detector output signal indicative of the profile of light absorbance of the sample solution (A) plug (4) or flow front passing through each detection window (W1, W2);

determining the time of detection of the plug (4) or flow front of the sample solution (A) at each detector window (W1, W2);

determining the time difference $\Delta t$ between the time of detection of the sample solution (A) plug (4) or flow front at each detection window (W1, W2); and

calculating the specific viscosity $\eta_{sp}$ of the sample solution (A) from the time difference $\Delta t$ for the plug of the sample solution (4), the length of the capillary (2) between the first and second ends $L$, the length of the plug (4) $l_{inj}$ injected into the first end of the capillary (2), and a known time difference $\Delta t_0$ between the time of detection at each detection window (W1, W2) for a plug of a reference sample solution whose viscosity is approximately equal to the viscosity of the carrier solution when pumped at the first pump pressure ($\Delta P$) where $\eta_{sp} = [(\Delta t - \Delta t_0)/\Delta t_0] \times (L/l_{inj})$; or

calculating the specific viscosity $\eta_{sp}$ of the sample solution (A) from the time difference $\Delta t$ for a flow front of the sample solution (A), the length of the capillary (2) between the first end and the first detector window (W1) $l_1$, the length of the capillary (2) between the first end and the second detector window (W2) $l_2$, the length of the capillary (2) between the first and second ends $L$, and a known time difference $\Delta t_0$ between the time of detection at each detection window (W1, W2) for a flow front of a reference sample solution whose viscosity is approximately equal to the viscosity of the carrier solution (S) when pumped at the first pump pressure ($\Delta P$) where $\eta_{sp} = [(\Delta t - \Delta t_0)/\Delta t_0] \times [2L/(l_1 + l_2)]$.

2. A method of measuring a viscosity of a sample solution (A, 4) according to claim 1, the method further comprising: dissolving an analyte in a buffer solution to form the sample solution (A, 4).

3. A method of characterising the dependence of the viscosity of a sample solution (A, 4) on concentration of the sample solution (A, 4), the method comprising:

measuring a specific viscosity of a sample solution (A, 4) according to the method of claim 2 with the analyte dissolved in the buffer solution at a first concentration; and

measuring a specific viscosity of a sample solution (A, 4) according to the method of claim 2 with the analyte dissolved in the buffer solution at one or more further concentrations different to the first concentration.

4. An apparatus for measuring a viscosity of a sample solution (A, 4), the apparatus comprising:

a capillary (2) having a first end and a second end and first and second spaced apart detection windows (W1, W2);

an injector arranged to selectively supply solutions to the first end of the capillary (2) at a first pump pressure ($\Delta P$);

a light source arranged to illuminate at least part of each detection window (W1, W2);

an array detector (6) comprising a two-dimensional array of detector locations arranged to detect light passing through the solutions in the capillary (2) from the light source and arranged to generate an array detector output signal indicative of the profile of light absorbance of light passing through the solutions in the capillary (2); and

a processor arranged to receive the output signal from the array detector (6);

wherein the injector is arranged to fill the capillary (2) with a carrier solution (S) and to inject a plug of a sample solution (4) into the first end of the capillary (2) such that the plug of the sample solution (4) is preceded and followed by the carrier solution (S), or the injector is arranged to fill the capillary (2) with a carrier solution (S) and then to continuously pump a sample solution (A) through the capillary (2) such that the flow front of the sample solution (A) is preceded by the carrier solution, such that the plug (4) or the flow front passes through the first and second detection windows (W1, W2);

wherein the processor is arranged to determine the time of detection of the plug (4) or flow front of the sample solution (A) at each detector window (W1, W2) from the array detector output signal and to determine the time difference $\Delta t$ between the time of detection of the sample solution (A) plug (4) or flow front at each detection window (W1, W2); and

wherein the processor is arranged to calculate the specific viscosity $\eta_{sp}$ of the sample solution (A) from the time difference $\Delta t$ for a plug of the sample solution (4), the length of the capillary (2) between the first and second ends $L$, the length of the plug (4) $l_{inj}$ injected into the first end of the capillary (2), and a known time difference $\Delta t_o$ between the time of detection at each detection window (W1, W2) for a plug of a reference sample solution whose viscosity is approximately equal to the viscosity of the carrier solution (S) when pumped at the first pump pressure ($\Delta P$) where $\eta_{sp} = [(\Delta t - \Delta t_o)/\Delta t_o] \times (L/l_{inj})$; or

the processor is arranged to calculate the specific viscosity $\eta_{sp}$ of the sample solution (A) from the time difference $\Delta t$ for a flow front of the sample solution (A), the length of the capillary (2) between the first end and the first detector window (W1) $l_1$, the length of the capillary (2) between the first end and the second detector window (W2) $l_2$, the length of the capillary (2) between the first and second ends $L$, and a known time difference $\Delta t_o$ between the time of detection at each detection window (W1, W2) for a flow front of a reference sample solution whose viscosity is approximately equal to the viscosity of the carrier solution (S) when pumped at the first pump pressure ($\Delta P$) where $\eta_{sp} = [(\Delta t - \Delta t_o)/\Delta t_o] \times [2L/(l_1 + l_2)]$.

5. An apparatus according to claim 4, wherein the two dimensional array of detector locations are arranged to provide a signal indicative of the two dimensional distribution of light absorbance of the carrier (S) and sample (A) solutions across each detection window (W1, W2).

6. An apparatus according to claim 4 or claim 5, wherein the light source emits at least one wavelength of light that is absorbed by one or more absorbing species comprised in the sample solution (A).

7. An apparatus according to claim 6, wherein the light source is arranged to supply ultraviolet (UV) light and the array detector (6) is arranged to provide a signal indicative of UV absorbance.

8. An apparatus according to claim 7, wherein the light source is arranged to provide light having a wavelength in the range 160 to 1200 nm, preferably 180 or 190 to 1200 nm.

9. An apparatus according to any one of claims 4 to 8, wherein the array detector (6) comprises a solid state sensing device, preferably a CMOS APS, a CCD or a CID.

**Patentansprüche**

1. Verfahren zur Messung der Viskosität einer Probenlösung (A, 4), wobei das Verfahren umfasst:

Füllen einer Kapillare (2) mit einer Trägerlösung (S), wobei die Kapillare (2) ein erstes und zweites voneinander beabstandetes Detektionsfenster (W1, W2) umfasst;
Injizieren eines Propfens einer Probenlösung (4) in das erste Ende der Kapillare (2) und Pumpen des Pfropfens der Probenlösung (4) durch die Kapillare (2) bei einem ersten Pumpdruck ($\Delta P$), so dass dem Pfropfen der Probenlösung (4) die Trägerlösung (S) vorausgeht und folgt, oder kontinuierliches Pumpen einer Probenlösung (A) durch die Kapillare (2) bei einem ersten Pumpdruck ($\Delta P$), so dass der Strömungsfront der Probenlösung (A) die Trägerlösung (S) vorausgeht, so dass der Pfropfen (4) oder die Strömungsfront durch das erste und zweite Detektionsfenster (W1, W2) hindurchgeht;
Beleuchten mindestens eines Teils jedes Detektionsfensters (W1, W2) mit einer Lichtquelle;
Detektieren von Licht von der Lichtquelle, das durch die Trägerlösung (S) oder die Probenlösung (A, 4) an jedem Detektorfenster (W1, W2) hindurchgeht unter Verwendung eines Array-Detektors (6), wobei der Array-Detektor ein zweidimensionales Array von Detektorpositionen umfasst;
Erzeugen eines Array-Detektorausgangssignals, das das Profil der Lichtabsorption des Pfropfens (4) oder der Strömungsfront der Probenlösung (A) anzeigt, der oder die durch jedes Detektorfenster (W1, W2) hindurchgeht;
Bestimmung der Detektionszeit des Pfropfens (4) oder der Strömungsfront der Probenlösung (A) an jedem Detektorfenster (W1, W2);
Bestimmen der Zeitdifferenz $\Delta t$ zwischen der Detektionszeit des Pfropfens (4) oder der Strömungsfront der Probenlösung (A) an jedem Detektorfenster (W1, W2); und
Berechnen der spezifischen Viskosität $n_{sp}$ der Probenlösung (A) aus der Zeitdifferenz $\Delta t$ für den Pfropfen der Probenlösung (4), der Länge der Kapillare (2) zwischen dem ersten und zweiten Ende L, der Länge des in das erste Ende der Kapillare (2) injizierten Pfropfens (4) $l_{inj}$ und einer bekannten Zeitdifferenz $\Delta t_0$ zwischen der Detektionszeit an jedem Detektionsfenster (W1, W2) für einen Pfropfen einer Referenzprobenlösung, deren Viskosität ungefähr gleich der Viskosität der Trägerlösung beim Pumpen beim ersten Pumpdruck ($\Delta P$) ist, wobei $n_{sp} = [(\Delta t - \Delta t_0)/\Delta t_0]x(L/l_{inj})$; oder

Berechnen der spezifischen Viskosität $n_{sp}$ der Probenlösung (A) aus der Zeitdifferenz $\Delta t$ für eine Strömungsfront der Probenlösung (A), der Länge der Kapillare (2) zwischen dem ersten Ende und dem ersten Detektorfenster (W1) $l_1$, der Länge der Kapillare (2) zwischen dem ersten Ende und dem zweiten Detektorfenster (W2) $l_2$, der Länge der Kapillare (2) zwischen dem ersten und dem zweiten Ende L und einer bekannten Zeitdifferenz $\Delta t_0$ zwischen der Detektionszeit an jedem Detektionsfenster (W1, W2) für eine Strömungsfront einer Referenzprobenlösung, deren Viskosität ungefähr gleich der Viskosität der Trägerlösung (S) beim Pumpen beim ersten Pumpdruck ($\Delta P$) ist, wobei $\eta_{sp} = [(\Delta t - \Delta t_0)/\Delta t_0]x[2L/(l_1 + l_2)]$.

2. Verfahren zum Messen einer Viskosität einer Probenlösung (A, 4) nach Anspruch 1, das Verfahren ferner umfassend:
Lösen eines Analyten in einer Pufferlösung zum Bilden der Probenlösung (A, 4).

3. Verfahren zur Charakterisierung der Abhängigkeit der Viskosität einer Probenlösung (A, 4) von einer Konzentration der Probenlösung (A, 4), das Verfahren umfassend:

Messen einer spezifischen Viskosität einer Probenlösung (A, 4) nach dem Verfahren nach Anspruch 2, wobei der Analyt in der Pufferlösung mit einer ersten Konzentration gelöst ist; und
Messen einer spezifischen Viskosität einer Probenlösung (A, 4) nach dem Verfahren nach Anspruch 2, wobei der Analyt in der Pufferlösung mit einer oder mehreren weiteren Konzentrationen, die sich von der ersten Konzentration unterscheiden, gelöst ist.

4. Vorrichtung zum Messen einer Viskosität einer Probenlösung (A, 4), die Vorrichtung umfassend:

eine Kapillare (2) mit einem ersten Ende und einem zweiten Ende und einem ersten und zweiten voneinander beabstandeten Detektionsfenster (W1, W2);
einen Injektor, der dazu eingerichtet ist, dem ersten Ende der Kapillare (2) bei einem ersten Pumpdruck ($\Delta P$) selektiv Lösungen zuzuführen;
eine Lichtquelle, die dazu eingerichtet ist, zumindest einen Teil jedes Detektionsfensters (W1, W2) zu beleuchten;
einen Array-Detektor (6) umfassend ein zweidimensionales Array von Detektorpositionen, der dazu eingerichtet ist, Licht von der Lichtquelle zu detektieren, das durch die Lösungen in der Kapillare (2) hindurchgeht, und der dazu eingerichtet ist, ein Array-Detektorausgangssignal zu erzeugen, das das Profil der Lichtabsorption von Licht, das durch die Lösungen in der Kapillare (2) hindurchgeht, anzeigt; und
einen Prozessor, der dazu eingerichtet ist, das Ausgangssignal des Array-Detektors (6) zu empfangen;
wobei der Injektor dazu eingerichtet ist, die Kapillare (2) mit einer Trägerlösung (S) zu füllen und einen Pfropfen einer Probenlösung (4) in das erste Ende der Kapillare (2) zu injizieren, so dass dem Pfropfen der Probenlösung (4) die Trägerlösung (S) vorausgeht und folgt, oder der Injektor dazu eingerichtet ist, die Kapillare (2) mit einer Trägerlösung (S) zu füllen und dann kontinuierlich eine Probenlösung (A) durch die Kapillare (2) zu pumpen, so dass der Strömungsfront der Probenlösung (A) die Trägerlösung vorausgeht, so dass der Pfropfen (4) oder die Strömungsfront durch das erste und zweite Detektionsfenster (W1, W2) hindurchgeht;
wobei der Prozessor dazu eingerichtet ist, die Detektionszeit des Pfropfens (4) oder der Strömungsfront der Probenlösung (A) an jedem Detektorfenster (W1, W2) aus dem Array-Detektorausgangssignal zu bestimmen und die Zeitdifferenz $\Delta t$ zwischen der Detektionszeit des Pfropfens (4) oder der Strömungsfront der Probenlösung (A) an jedem Detektionsfenster (W1, W2) zu bestimmen; und
wobei der Prozessor dazu eingerichtet ist, die spezifische Viskosität $\eta_{sp}$ der Probenlösung (A) aus der Zeitdifferenz $\Delta t$ für einen Pfropfen der Probenlösung (4), der Länge der Kapillare (2) zwischen dem ersten und zweiten Ende L, der Länge des in das erste Ende der Kapillare (2) injizierten Pfropfens (4) $l_{inj}$ und einer bekannten Zeitdifferenz $\Delta t_0$ zwischen der Detektionszeit an jedem Detektionsfenster (W1, W2) für einen Pfropfen einer Referenzprobenlösung, deren Viskosität ungefähr gleich der Viskosität der Trägerlösung (S) beim Pumpen mit dem ersten Pumpdruck ($\Delta P$) ist, zu berechnen, wobei $n_{sp} = [(\Delta t - \Delta t_0)/\Delta t_0]x(L/l_{inj})$; oder
der Prozessor dazu eingerichtet ist, die spezifische Viskosität $\eta_{sp}$ der Probenlösung (A) aus der Zeitdifferenz $\Delta t$ für eine Strömungsfront der Probenlösung (A), der Länge der Kapillare (2) zwischen dem ersten Ende und dem ersten Detektorfenster (W1) $l_1$, der Länge der Kapillare (2) zwischen dem ersten Ende und dem zweiten Detektorfenster (W2) $l_2$, der Länge der Kapillare (2) zwischen dem ersten und dem zweiten Ende L und einer

bekannten Zeitdifferenz $\Delta t_0$ zwischen der Detektionszeit an jedem Detektionsfenster (W1, W2) für eine Strömungsfront einer Referenzprobenlösung, deren Viskosität ungefähr gleich der Viskosität der Trägerlösung (S) beim Pumpen mit dem ersten Pumpdruck ($\Delta P$) ist, zu berechnen, wobei $\eta_{sp} = [(\Delta t-\Delta t_0)/\Delta t_0]\times[2L/(l_1+l_2)]$.

5. Vorrichtung nach Anspruch 4, wobei das zweidimensionale Array von Detektorpositionen dazu eingerichtet ist, ein Signal bereitzustellen, das die zweidimensionale Verteilung der Lichtabsorption der Träger- (S) und Proben- (A) Lösungen über jedes Detektionsfenster (W1, W2) anzeigt.

6. Vorrichtung nach Anspruch 4 oder Anspruch 5, wobei die Lichtquelle mindestens eine Wellenlänge von Licht emittiert, die von einer oder mehreren absorbierenden Spezies, die in der Probenlösung (A) enthalten sind, absorbiert wird.

7. Vorrichtung nach Anspruch 6, wobei die Lichtquelle dazu eingerichtet ist, ultraviolettes (UV) Licht zu liefern und der Array-Detektor (6) dazu eingerichtet ist, ein Signal bereitzustellen, das die UV-Absorption anzeigt.

8. Vorrichtung nach Anspruch 7, wobei die Lichtquelle dazu eingerichtet ist, Licht mit einer Wellenlänge im Bereich von 160 bis 1200 nm, vorzugsweise 180 oder 190 bis 1200 nm, bereitzustellen.

9. Vorrichtung nach einem der Ansprüche 4 bis 8, wobei der Array-Detektor (6) eine Festkörper-Sensorvorrichtung, vorzugsweise einen CMOS APS, einen CCD oder einen CID, umfasst.

**Revendications**

1. Procédé de mesure de la viscosité d'une solution échantillon (A, 4), le procédé comprenant le fait :

de remplir un capillaire (2) d'une solution porteuse (S), le capillaire (2) comprenant des première et deuxième fenêtres de détection espacées (W1, W2) ;
d'injecter un bouchon d'une solution échantillon (4) dans la première extrémité du capillaire (2) et de pomper le bouchon de la solution échantillon (4) à travers le capillaire (2) à une première pression de pompage ($\Delta P$) de sorte que le bouchon de la solution échantillon (4) soit précédé et suivi de la solution porteuse (S), ou de pomper en continu une solution échantillon (A) à travers le capillaire (2) à une première pression de pompage ($\Delta P$) de sorte que le front d'écoulement de la solution échantillon (A) soit précédé de la solution porteuse (S), de manière à ce que le bouchon (4) ou le front d'écoulement passe à travers les première et deuxième fenêtres de détection (W1, W2) ;
d'éclairer au moins une partie de chaque fenêtre de détection (W1, W2) avec une source de lumière ;
de détecter la lumière provenant de la source de lumière traversant la solution porteuse (S) ou la solution échantillon (A, 4) au niveau de chaque fenêtre de détection (W1, W2) en utilisant un détecteur matriciel (6), le détecteur matriciel comprenant une matrice bidimensionnelle d'emplacements de détecteur ;
de générer un signal de sortie de détecteur matriciel indiquant le profil d'absorbance de lumière du bouchon (4) ou du front d'écoulement de la solution échantillon (A) traversant chaque fenêtre de détection (W1, W2) ;
de déterminer le moment de détection du bouchon (4) ou du front d'écoulement de la solution échantillon (A) au niveau de chaque fenêtre de détection (W1, W2) ;
de déterminer la différence de temps $\Delta t$ entre les moments de détection du bouchon (4) ou du front d'écoulement de la solution échantillon (A) au niveau de chaque fenêtre de détection (W1, W2) ; et
de calculer la viscosité spécifique $\eta_{sp}$ de la solution échantillon (A) à partir de la différence de temps $\Delta t$ pour le bouchon de la solution échantillon (4), la longueur du capillaire (2) entre les première et deuxième extrémités $L$, la longueur du bouchon (4) $l_{inj}$ injecté dans la première extrémité du capillaire (2) et d'une différence de temps connue $\Delta t_0$ entre les moments de détection au niveau de chaque fenêtre de détection (W1, W2) pour un bouchon d'une solution échantillon de référence dont la viscosité est approximativement égale à la viscosité de la solution porteuse lorsqu'elle est pompée à la première pression de pompage ($\Delta P$) où $n_{sp} = [(\Delta t-\Delta t_0)/\Delta t_0] \times (L/l_{inj})$ ; ou
de calculer la viscosité spécifique $n_{sp}$ de la solution échantillon (A) à partir de la différence de temps $\Delta t$ pour un front d'écoulement de la solution échantillon (A), la longueur du capillaire (2) entre la première extrémité et la première fenêtre de détection (W1) $l_1$, la longueur du capillaire (2) entre la première extrémité et la deuxième fenêtre de détection (W2) $l_2$, la longueur du capillaire (2) entre les première et deuxième extrémités $L$ et d'une différence de temps connue $\Delta t_0$ entre les moments de détection au niveau de chaque fenêtre de détection (W1, W2) pour un front d'écoulement d'une solution échantillon de référence dont la viscosité est approximativement égale à la viscosité de la solution porteuse (S) lorsqu'elle est pompée à la première pression de pompage ($\Delta P$) où $\eta_{sp} = [(\Delta t-\Delta t_0)/\Delta t_0] \times [2L/(l_1+l_2)]$.

**2.** Procédé de mesure de la viscosité d'une solution échantillon (A, 4) selon la revendication 1, le procédé comprenant en outre le fait :
de dissoudre un analyte dans une solution tampon pour former la solution échantillon (A, 4).

**3.** Procédé de caractérisation de la dépendance de la viscosité d'une solution échantillon (A, 4) à la concentration de la solution échantillon (A, 4), le procédé comprenant le fait :

de mesurer une viscosité spécifique d'une solution échantillon (A, 4) selon le procédé de la revendication 2 avec l'analyte dissous dans la solution tampon à une première concentration ; et
de mesurer une viscosité spécifique d'une solution échantillon (A, 4) selon le procédé de la revendication 2 avec l'analyte dissous dans la solution tampon à une ou plusieurs autre(s) concentration(s) différente(s) de la première concentration.

**4.** Appareil pour mesurer la viscosité d'une solution échantillon (A, 4), l'appareil comprenant :

un capillaire (2) ayant une première extrémité et une deuxième extrémité et des première et deuxième fenêtres de détection espacées (W1, W2) ;
un injecteur agencé pour alimenter sélectivement en solutions la première extrémité du capillaire (2) à une première pression de pompage ($\Delta$P) ;
une source de lumière agencée pour éclairer au moins une partie de chaque fenêtre de détection (W1, W2) ;
un détecteur matriciel (6) comprenant une matrice bidimensionnelle d'emplacements de détecteur agencé pour détecter la lumière traversant les solutions dans le capillaire (2) provenant de la source de lumière et agencé pour générer un signal de sortie de détecteur matriciel indiquant le profil d'absorbance de lumière de la lumière traversant les solutions dans le capillaire (2) ; et
un processeur agencé pour recevoir le signal de sortie provenant du détecteur matriciel (6) ;
où l'injecteur est agencé pour remplir le capillaire (2) d'une solution porteuse (S) et pour injecter un bouchon d'une solution échantillon (4) dans la première extrémité du capillaire (2) de sorte que le bouchon de la solution échantillon (4) soit précédé et suivi de la solution porteuse (S), ou l'injecteur est agencé pour remplir le capillaire (2) d'une solution porteuse (S) et pour ensuite pomper en continu une solution échantillon (A) à travers le capillaire (2) de sorte que le front d'écoulement de la solution échantillon (A) soit précédé de la solution porteuse, de manière à ce que le bouchon (4) ou le front d'écoulement passe à travers les première et deuxième fenêtres de détection (W1, W2) ;
où le processeur est agencé pour déterminer le moment de détection du bouchon (4) ou du front d'écoulement de la solution échantillon (A) au niveau de chaque fenêtre de détection (W1, W2) à partir du signal de sortie de détecteur matriciel et pour déterminer la différence de temps $\Delta t$ entre les moments de détection du bouchon (4) ou du front d'écoulement de la solution échantillon (A) au niveau de chaque fenêtre de détection (W1, W2) ; et
où le processeur est agencé pour calculer la viscosité spécifique $\eta_{sp}$ de la solution échantillon (A) à partir de la différence de temps $\Delta t$ pour un bouchon de la solution échantillon (4), la longueur du capillaire (2) entre les première et deuxième extrémités $L$, la longueur du bouchon (4) $l_{inj}$ injecté dans la première extrémité du capillaire (2) et d'une différence de temps connue $\Delta t_0$ entre les moments de détection au niveau de chaque fenêtre de détection (W1, W2) pour un bouchon d'une solution échantillon de référence dont la viscosité est approximativement égale à la viscosité de la solution porteuse (S) lorsqu'elle est pompée à la première pression de pompage ($\Delta$P) où $\eta_{sp} = [(\Delta t - \Delta t_0)/\Delta t_0] \times (L/l_{inj})$ ; ou
le processeur est agencé pour calculer la viscosité spécifique $\eta_{sp}$ de la solution échantillon (A) à partir de la différence de temps $\Delta t$ pour un front d'écoulement de la solution échantillon (A), la longueur du capillaire (2) entre la première extrémité et la première fenêtre de détection (W1) $l_1$, la longueur du capillaire (2) entre la première extrémité et la deuxième fenêtre de détection (W2) $l_2$, la longueur du capillaire (2) entre les première et deuxième extrémités $L$ et d'une différence de temps connue $\Delta t_0$ entre les moments de détection au niveau de chaque fenêtre de détection (W1, W2) pour un front d'écoulement d'une solution échantillon de référence dont la viscosité est approximativement égale à la viscosité de la solution porteuse (S) lorsqu'elle est pompée à la première pression de pompage ($\Delta$P) où $\eta_{sp} = [(\Delta t - \Delta t_0)/\Delta t_0] \times [2L/(l_1 + l_2)]$.

**5.** Appareil selon la revendication 4, dans lequel la matrice bidimensionnelle d'emplacements de détecteur est agencée pour fournir un signal indiquant la distribution bidimensionnelle de l'absorbance de lumière de la solution porteuse (S) et de la solution échantillon (A) à travers chaque fenêtre de détection (W1, W2).

**6.** Appareil selon la revendication 4 ou 5, dans lequel la source de lumière émet au moins une longueur d'onde de lumière qui est absorbée par une ou plusieurs espèce(s) absorbante(s) comprise(s) dans la solution échantillon (A).

**7.** Appareil selon la revendication 6, dans lequel la source de lumière est agencée pour donner une lumière ultraviolette (UV) et le détecteur matriciel (6) est agencé pour fournir un signal indiquant l'absorbance UV.

**8.** Appareil selon la revendication 7, dans lequel la source de lumière est agencée pour fournir une lumière ayant une longueur d'onde se trouvant dans la plage allant de 160 à 1200 nm, de préférence de 180 ou de 190 à 1200 nm.

**9.** Appareil selon l'une quelconque des revendications 4 à 8, dans lequel le détecteur matriciel (6) comprend un dispositif de détection à semiconducteurs, de préférence un APS CMOS, un CCD ou un CID.

Figure 1

**Figure 2**

**Figure 3**

Figure 4

**Figure 5**

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7262847 B
- EP 1530716 B1
- US 7039527 B2
- US 4899575 A
- US 20030041652 A1
- US 5333497 A
- US 20060070426 A1
- EP 2009053013 W
- WO 2010009907 A
- US 7039527 B

**Non-patent literature cited in the description**

- **BERGMAN et al.** *J. Microcolumn Separations,* 1998, vol. 10, 19-26
- A scanning dual-capillary-tube viscometer. **KIM, SANGHO et al.** Review of Scientific Instruments. AIP, August 2000, vol. 71, 3188-3192
- **D. KIM ; N. C. CHESLER ; D. J. BEEBE.** A method for dynamic system characterization using hydraulic series resistance. *Lab Chip,* 2006, vol. 6, 639-644
- **J. L. RICHARDS.** Viscosity and the shapes of macromolecules. *J. Chem. Educ.,* 1993, vol. 70, 685-689
- **J. CHIRIFE ; M. BUERA.** *J. Food Eng.,* 1997, vol. 33, 221-226